# EUROPEAN PATENT SPECIFICATION

(11) **EP 3 880 047 B1**
(45) Date of publication and mention of the grant of the patent: **07.02.2024**
(21) Application number: 19883693.4
(22) Date of filing: 31.10.2019
(51) Int. Cl.: A47J 43/046, A47J 43/07

(54) **A FOOD PROCESSOR**
LEBENSMITTELVERARBEITUNGSVORRICHTUNG
ROBOT CULINAIRE

(30) Priority: 14.11.2018 CN 201821874321 U
(43) Date of publication of application: 22.09.2021
(73) Proprietor: Zhejiang Shaoxing Supor Domestic Electrical Appliance Co., Ltd, Shaoxing, Zhejiang 312017 (CN)
(72) Inventor: YU, Ping, Shaoxing, Zhejiang 312017 (CN)
(74) Representative: LLR
(86) International application number: PCT/CN2019/114799
(87) International publication number: WO 2020/098507

(56) References cited:
- CN-A- 106 974 565
- CN-U- 206 166 749
- CN-U- 206 560 377
- CN-U- 206 560 377
- CN-U- 206 621 291
- CN-U- 207 768 231
- CN-U- 207 768 231
- CN-U- 209 346 786
- CN-U- 209 346 794
- JP-A- 2018 027 336

## Description

### Field of the Invention

The invention relates to the field of small home electrical appliances, and in particular, to a food processor.

### Background of the Invention

Existing food processors have gained popularity and recognition with people due to advantages such as having multiple functions (heating, mixing, and grounding), achieving good mixing and grounding results and being convenient to use. They have become indispensable electrical appliances in people's life.

More health requirements are imposed on the juicing function of food processors currently on the market. That is to say, not only is the juice required to be fine, but also the processors are required to be able to create a vacuum so as to prevent food from being oxidized too fast with nutrients destroyed. To achieve this in actual products, some provide a vacuum creating device inside a base, and some provide a vacuum creating device inside a cup lid. The document CN207768231U describes a compound lid for a food processor. The lid is provided therein with a vacuum creating device that allows to create vacuum in the food processing cup when necessary. Regardless of whether it is provided inside the base or the cup lid, either solution increases the design and processing difficulty of the base or the cup lid.

### Summary of the Invention

The invention provides a food processor.

According to a first aspect of the application, a food processor is provided according to claim 1. It comprises a base, a vacuum creating device, a food processing cup provided on the base and a cup lid provided on the food processing cup, wherein the cup lid comprises an upper lid and a lower lid that are rotatably assembled to form a reserved cavity therebetween, the upper lid and the lower lid being able to switch between a communicating state in which the reserved cavity is in communication with the food processing cup and a blocked state in which the communication is blocked, and wherein the vacuum creating device communicating with the reserved cavity can perform a vacuum creating operation on the food processing cup. In addition, the upper lid comprises a first top wall and a first side wall connected with the first top wall, the first top wall being provided with a venting part at its center, at least one venting hole being provided in the venting part, wherein the lower lid comprises a second top wall and a second side wall connected with the second top wall, a sliding slot being provided on the second top wall, the first side wall being inserted inside the sliding slot and rotatable along the sliding slot, the second top wall being provided with a suction hole that can communicate with the venting hole.

Further, a wall extends downward from the first top wall, forming a blocking hole that can cooperate with the suction hole, wherein when the upper lid is rotated to a position in which the blocking hole is located above the suction hole, the food processing cup is in the blocked state, and wherein when the upper lid is rotated to a position in which the blocking hole is offset from the suction hole, the food processing cup is in the communicating state.

Further, a first seal is provided inside the suction hole, the first seal covering an inner wall, an upper end, and a lower end of the suction hole, wherein when the food processing cup is in the blocked state, a bottom of the blocking hole cooperates with the first seal in an interference-fit manner so as to ensure a sealing between the upper lid and the lower lid.

Further, an inner wall of the venting part is provided with a stopper, and the second top wall is provided with a stopper slot that is concentric with the sliding slot, wherein when the upper lid is rotated, the stopper being slidable inside the stopper slot so as to make the upper lid and the lower lid switch between the communicating state and the blocked state.

Further, at least one rotation stopping rib is provided inside the stopper slot, wherein when the stopper is rotated to abut against the rotation stopping rib, the blocking hole is located above the suction hole.

Further, the second top wall is provided with an assembly hole at its center, and the first top wall is provided with a positioning hole that faces the assembly hole, a rotary axle that rotatably connects the upper lid and the lower lid and around which the upper lid is rotatable being provided inside the assembly hole and the positioning hole.

Further, a ring-shaped protruding rib extending upward is provided on a periphery of the venting part, and the first top wall, which is connected with the ring-shaped protruding rib, is provided in an upward inclining manner, wherein the vacuum creating device is arranged above the upper lid, and a second seal being provided between the vacuum creating device and the upper lid.

Further, the second seal is sealingly connected with the ring-shaped protruding rib.

Further, the lower lid is provided with a third seal that is sealingly connected with the food processing cup.

It can be seen from the above technical solutions that, in the invention, by providing a cup lid composed of an upper lid and a lower lid able to rotate relative to each other, a switch between a communicating state and a blocked state is achieved through different assembly positions of the upper and lower lids, making it more convenient to control vacuum creating operations of the food processor. By providing a reserved cavity, air is prevented from returning to the food processing cup after the vacuum creating operation is finished, ensuring the reliability of the vacuum creating.

It should be understood that the general description above and the following detailed description are merely illustrative and explanatory, and cannot limit the invention.

### Brief Description of the Drawings

To more clearly describe the technical solutions according to embodiments of the invention, the accompanying drawings to be used for describing embodiments are described briefly. Obviously, the accompanying drawings described below are merely some embodiments of the invention. To a person skilled in the art, other drawings can be obtained without creative labor based on those accompanying drawings.
Figure 1 is a schematic perspective sectional assembled view of a food processor according to an embodiment of the invention;
Figure 2 is a schematic partial exploded view of a food processor according to an embodiment of the invention;
Figure 3 is a schematic perspective sectional assembled view of a cup, a cup lid, and a vacuum creating device according to an embodiment of the invention (in a vacuum-creating state);
Figure 4 is a schematic perspective sectional assembled view of a cup, a cup lid, and vacuum creating device according to an embodiment of the invention (in a blocked state);
Figure 5 is a schematic sectional assembled view of a cup lid in a vacuum-creating state according to an embodiment of the invention;
Figure 6 is a schematic sectional assembled view of a cup lid in a blocked state according to an embodiment of the invention;
Figure 7 is a schematic perspective view of an upper lid according to an embodiment of the invention;
Figure 8 is a schematic perspective view of an upper lid according to an embodiment of the invention from a different angle;
Figure 9 is a schematic top view of an upper lid according to an embodiment of the invention;
Figure 10 is a schematic sectional view along the A-A direction of Figure 9;
Figure 11 is a schematic top view of a lower lid according to an embodiment of the application; and
Figure 12 is a schematic sectional view along the A-A direction of Figure 11.

Reference signs in the accompanying drawings:
Food processor 100
Base 1 Food processing cup 2 Cup lid 3
Upper lid 30 First top wall 301 First side wall 302
Venting part 303 Venting hole 3031 Stopper 3032
Blocking hole 304 Positioning hole 305 Protruding rib 306
Lower lid 31 Second top wall 310 Sliding slot 3101
Suction hole 3102 Stopper slot 3103 Rotation stopping rib 3104
Second side wall 311 Assembly hole 312 Housing slot 313
Reserved cavity 32 First seal 33 Rotary axle 34
Second seal 35 Third seal 36
Vacuum creating device 4

### Detailed Description of the Embodiments

Exemplary embodiments, which are illustrated in the accompanying drawings, will be described in detail here. In the description below, when it refers to the accompanying drawings, the same reference numerals in different figures represent the same or similar elements, unless otherwise indicated. The modes of realization described in the exemplary embodiments below do not represent all the modes of realization in accordance with the invention. On the contrary, they are merely examples of devices and methods in accordance with some aspects of the invention as described in detail in the appended claims.

The terms used in the invention are merely for the purpose of describing specific embodiments, rather than limiting the invention. Singular forms such as "alan," "the/said" and "this" used in the invention and the appended claims are intended to include the plural form, unless the context clearly indicates otherwise. It should also be understood that, the term "and/or" used herein means and comprises any and all possible combinations of one or more of the associated listed items.

It should be understood that, although the invention may use terms such as "first," "second," and "third" to describe various items of information, those items of information are not limited to those terms. Those terms are merely used to distinguish information of the same type. For example, without departing from the scope of the invention, a first item of information can also be referred to as a second item of information. Similarly, a second item of information can also be referred to as a first item of information. Depending on the context, terms such as "if' used herein can be construed as "when ..." or "in the event that . . ." or "in response to the determination that . . . ."

A food processor 100 of the invention is described in detail below in connection with the accompanying drawings. The features in the embodiments and modes of realization described below can be combined with each other, provided that there is no conflict.

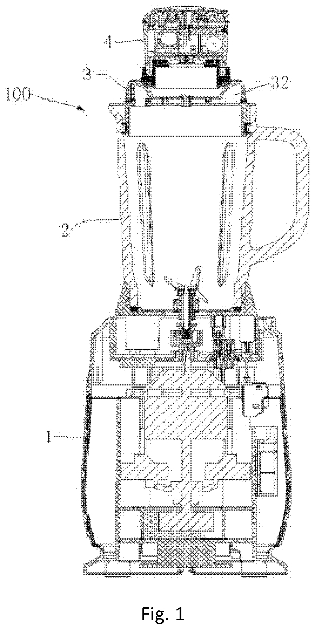

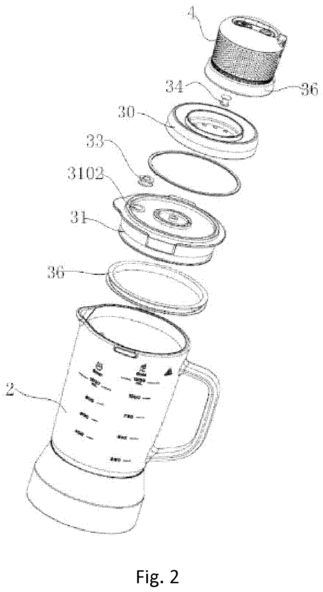

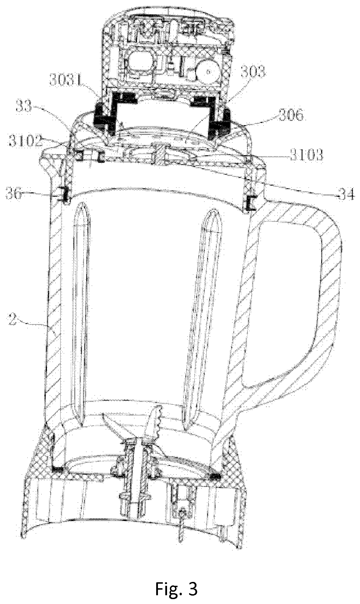

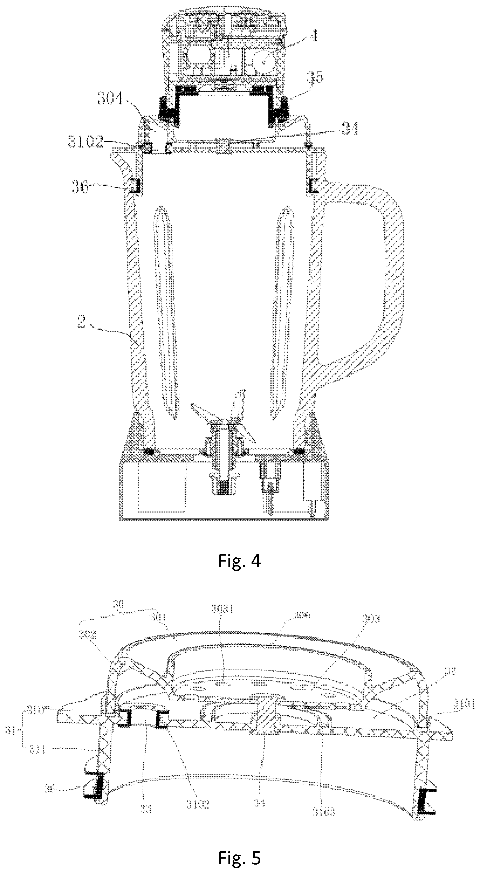

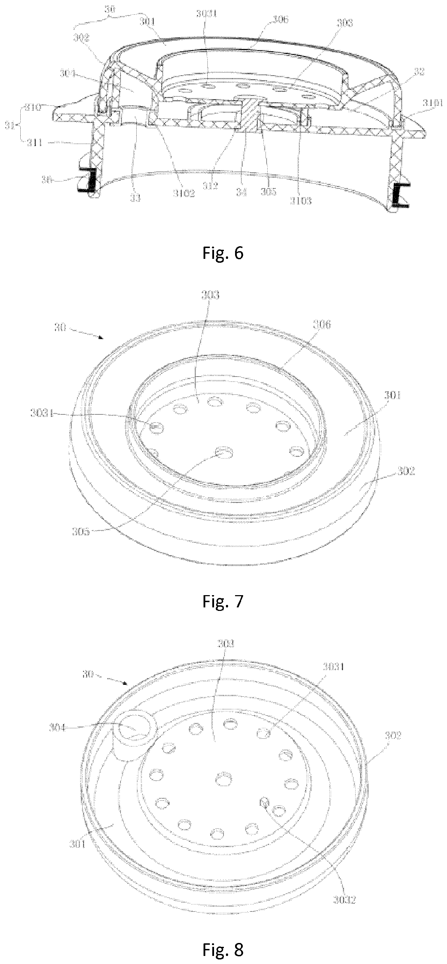

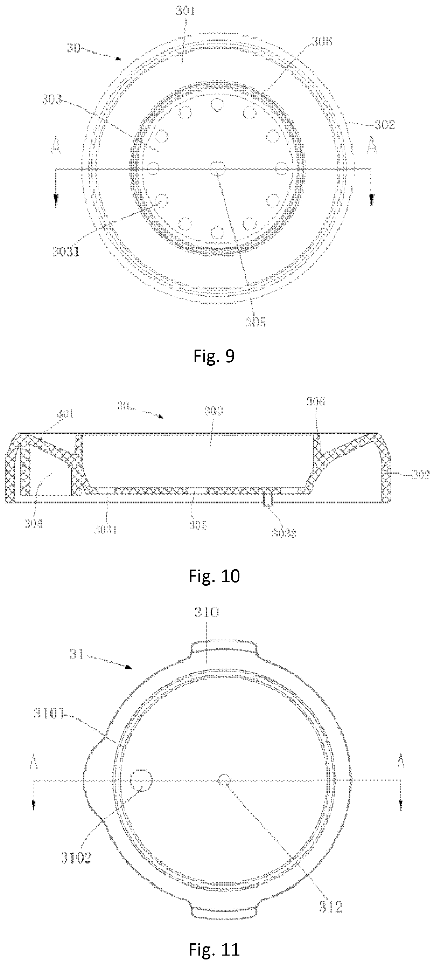

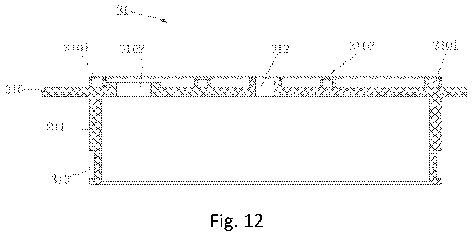

With reference to Figures 1 to 12, a food processor 100 according to the present application comprises a base 1, a vacuum creating device 4, and a food processing cup 2 provided on the base 1. The food processing cup 2 is provided with a cup lid 3 comprising an upper lid 30 and a lower lid 31 that are rotatably assembled. A reserved cavity 32 is formed after the upper lid 30 and the lower lid 31 are assembled. The upper lid 30 and the lower lid 31 can switch between a communicating state in which the reserved cavity 32 is in communication with the food processing cup 2 and a blocked state in which the communication is blocked. The vacuum creating device 4 communicates with the reserved cavity 32 and performs a vacuum creating operation on the food processing cup 2. Providing the reserved cavity 32 enables the food processor 100 to separate the air inside the reserved cavity 22 and the food processing cup 2 after a vacuum creating operation is finished. After the vacuum creating device 4 is removed, there is still vacuum inside the food processing cup 2. The use flexibility of the product is thus increased. A grounding blade is provided inside the food processing cup. An electric motor that drives the grounding blade to rotate is provided inside the base. A shaft of the electric motor is connected with the grounding blade through a coupler so as to ensure the coaxiality between the two during rotation.

In an embodiment, the upper lid 30 comprises a top wall 301 provided with a venting part 303 at its center, and a first side wall 302 connected with the first top wall 301. The venting part 303 is a circular region and is provided with at least one venting hole 3031. In the present embodiment, multiple venting holes 3031 are provided in a spaced manner along the circular region. The lower lid 31 comprises a second top wall 310 provided with a sliding slot 3101 and a second side wall 311 connected with the second top wall 310. The first side wall 302 is inserted inside the sliding slot 3101, and is rotatable along the sliding slot 3101. The second top wall 310 is provided with a suction hole 3102 that can communicate with the venting hole 3031. The suction hole 3102 is provided at a location near the periphery of the second top wall 310. A seal is provided inside the sliding slot.

A cylindrical wall extends downward from the first top wall 301, forming a blocking hole 304 that can cooperate with the suction hole 3102. When the upper lid 30 is rotated to a position in which the blocking hole 304 is located above the suction hole 3102, the food processing cup 2 is in the blocked state. At this moment, the vacuum creating device 4 cannot perform a vacuum creating operation on the food processing cup 2. When the upper lid 30 is rotated to a position in which the blocking hole 304 is offset from the suction hole 3102, the food processing cup 2 is in the communicating state in which the vacuum creating device 4 is able to perform a vacuum creating operation on the food processing cup 2 so as to place food in the cup in a vacuum state.

To ensure the sealing performance after the upper lid 30 and the lower lid 31 are assembled, a first seal 33 is provided inside the suction hole 3102. The first seal 33 covers an inner wall, an upper end, and a lower end of the suction hole 3102. In other words, a vertical part of the first seal 33 seals the inner wall of the suction hole 3102, and horizontal parts extending at two ends of the vertical part seal, respectively, the upper and lower ends of the suction hole 3102. When the food processing cup 2 is in the blocked state, the bottom of the blocking hole 304 cooperates with the first seal 33 in an interference-fit manner, so as to ensure the sealing between the upper lid 30 and the lower lid 31.

The inner wall of the venting part 303 is provided with a stopper 3032. The second top wall 310 is provided with a stopper slot 3103 that is concentric with the sliding slot 3101. When the upper lid 30 is rotated, the stopper 3032 is slidable inside the stopper slot 3103, so as to make the upper lid 30, the lower lid 31 and the food processing cup 2 switch between the communicating state and the blocked state.

At least one rotation stopping rib 3104 is provided inside the stopper slot 3103. When the stopper 3032 rotates to a position in which it abuts against the rotation stopping rib 3104, the blocking hole 304 and the suction hole 3102 are in the blocked state relative to the food processing cup 2. Thanks to the blocking of the stopper, the reliability of the alignment between the blocking hole 304 and the suction hole 3102 is ensured, thus ensuring the effectiveness of the vacuum creating.

To ensure the stability of the upper lid 30 when it rotates around the lower lid 31, the second top wall 310 is provided with an assembly hole 312 at its center, and the first top wall 301 is provided with a positioning hole 305 facing the assembly hole 312. A rotary axle 34 that rotatably connects the upper lid 30 and the lower lid 31 is provided inside the assembly hole 312 and the positioning hole 305. The upper lid 30 rotates around the rotary axle 34, so as to ensure balance during the rotation of the upper lid 30 relative to the lower lid 31.

A ring-shaped protruding rib 306 extends upward at the periphery of the venting part 303. The first top wall 301, which is connected with the ring-shaped protruding rib 306, is provided in an upward inclining manner. The vacuum creating device 4 is provided above the upper lid 30 and a second seal 35 is provided between it and the upper lid 30. The second seal 35 seals the junction between the vacuum creating device 4 and the upper lid 30 and ensures the reliability of the sealing. Moreover, there is an adapted bevel structure at the location where the second seal 35 seals the upward inclining first top wall 301.

The second seal 35 is sealingly connected with the ring-shaped protruding rib 306.

To make sure that sealing is ensured when the food processor 100 is in the vacuum-creating state, the lower lid 31 is provided with a third seal 36 that is sealingly connected with the food processing cup 2. Specifically, a face of a vertical wall of the lower lid 31 that extends into the food processing cup 2 is provided with a housing slot in which the third seal 36 is arranged.

## Claims

1. A food processor (100) comprising a base (1), a vacuum creating device (4), a food processing cup (2) provided on the base (1) and a cup lid (3) provided on the food processing cup (2), wherein the cup lid (3) comprises an upper lid (30) and a lower lid (31) that are rotatably assembled to form a reserved cavity (32) therebetween, the upper lid (30) and the lower lid (31) being able to switch between a communicating state in which the reserved cavity (32) is in communication with the food processing cup (2) and a blocked state in which the communication is blocked, and wherein the vacuum creating device (4) communicating with the reserved cavity (32) can perform a vacuum creating operation on the food processing cup (2), **characterized in that** the upper lid (30) comprises a first top wall (301) and a first side wall (302) connected with the first top wall (301), the first top wall (301) being provided with a venting part (303) at its center, at least one venting hole (3031) being provided in the venting part (303), **in that** the lower lid (31) comprises a second top wall (310) and a second side wall (311) connected with the second top wall (310), a sliding slot (3101) being provided on the second top wall (310), the first side wall (302) being inserted inside the sliding slot (3101) and rotatable along the sliding slot (3101), the second top wall (310) being provided with a suction hole (3102) that can communicate with the venting hole (3031).

2. The food processor (100) according to claim 1, wherein a wall extends downward from the first top wall (301), forming a blocking hole (304) that can cooperate with the suction hole (3102), wherein when the upper lid (30) is rotated to a position in which the blocking hole (304) is located above the suction hole (3102), the food processing cup (2) is in the blocked state, and wherein when the upper lid (30) is rotated to a position in which the blocking hole (304) is offset from the suction hole (3102), the food processing cup (2) is in the communicating state.

3. The food processor (100) according to claim 2, wherein a first seal (33) is provided inside the suction hole (3102), the first seal (33) covering an inner wall, an upper end, and a lower end of the suction hole (3102), wherein when the food processing cup (2) is in the blocked state, a bottom of the blocking hole (304) cooperates with the first seal (33) in an interference-fit manner so as to ensure a sealing between the upper lid (30) and the lower lid (31).

4. The food processor (100) according to any one of claims 1 to 3, wherein an inner wall of the venting part (303) is provided with a stopper (3032), and the second top wall (310) is provided with a stopper slot (3103) that is concentric with the sliding slot (3101), wherein when the upper lid (30) is rotated, the stopper (3032) being slidable inside the stopper slot (3103) so as to make the upper lid (30) and the lower lid (31) switch between the communicating state and the blocked state.

5. The food processor (100) according to claim 4, wherein at least one rotation stopping rib (3104) is provided inside the stopper slot (3103), wherein when the stopper (3032) is rotated to abut against the rotation stopping rib (3104), the blocking hole (304) is located above the suction hole (3102).

6. The food processor (100) according to any one of claims 1 to 5, wherein the second top wall (310) is provided with an assembly hole (312) at its center, and the first top wall (301) is provided with a positioning hole (305) that faces the assembly hole (312), a rotary axle (34) that rotatably connects the upper lid (30) and the lower lid (31) and around which the upper lid (30) is rotatable being provided inside the assembly hole (312) and the positioning hole (305).

7. The food processor (100) according to any one of claims 1 to 6, wherein a ring-shaped protruding rib (306) extending upward is provided on a periphery of the venting part (303), and the first top wall (301), which is connected with the ring-shaped protruding rib (306), is provided in an upward inclining manner, wherein the vacuum creating device (4) is arranged above the upper lid (30), and a second seal (35) being provided between the vacuum creating device (4) and the upper lid (30).

8. The food processor (100) according to claim 7, wherein the second seal (35) is sealingly connected with the ring-shaped protruding rib (306).

9. The food processor (100) according to any one of claims 1 to 8, wherein the lower lid (31) is provided with a third seal (36) that is sealingly connected with the food processing cup (2).

## Patentansprüche

1. Lebensmittelverarbeitungsvorrichtung (100) mit einem Basiselement (1), einer Vakuumerzeugungsvorrichtung (4), einem auf dem Basiselement (1) vorgesehenen Lebensmittelverarbeitungsbehälter (2) und einem auf dem Lebensmittelverarbeitungsbehälter (2) vorgesehenen Behälterdeckel (3), wobei der Behälterdeckel (3) einen oberen Deckel (30) und einen unteren Deckel (31) umfasst, die drehbar zusammengesetzt sind, um dazwischen einen freigehaltenen Hohlraum (32) zu bilden, wobei der obere Deckel (30) und der untere Deckel (31) in der Lage sind, zwischen einem Verbindungszustand, in dem der freigehaltene Hohlraum (32) in Verbindung mit dem Lebensmittelverarbeitungsbehälter (2) steht, und einem Sperrzustand, in dem die Verbindung gesperrt ist, zu wechseln, und wobei die Vakuumerzeugungsvorrichtung (4), die mit dem freigehaltenen Hohlraum (32) in Verbindung steht, einen Vakuumerzeugungsvorgang an dem Lebensmittelverarbeitungsbehälter (2) durchführen kann, **dadurch gekennzeichnet, dass** der obere Deckel (30) eine erste obere Wand (301) und eine erste Seitenwand (302), die mit der ersten oberen Wand (301) verbunden ist, umfasst, wobei die erste obere Wand (301) in ihrer Mitte mit einem Entlüftungsteil (303) versehen ist, wobei in dem Entlüftungsteil (303) mindestens ein Entlüftungsloch (3031) vorgesehen ist, und dass der untere Deckel (31) eine zweite obere Wand (310) und eine zweite Seitenwand (311), die mit der zweiten oberen Wand (310) verbunden ist, umfasst, wobei an der zweiten oberen Wand (310) eine Schiebeführung (3101) vorgesehen ist, wobei die erste Seitenwand (302) in die Schiebeführung (3101) eingesetzt und entlang der Schiebeführung (3101) drehbar ist, wobei die zweite obere Wand (310) mit einem Ansaugloch (3102) versehen ist, das mit dem Entlüftungsloch (3031) in Verbindung stehen kann.

2. Lebensmittelverarbeitungsvorrichtung (100) nach Anspruch 1, wobei sich eine Wand von der ersten oberen Wand (301) nach unten erstreckt und ein Sperrloch (304) bildet, das mit dem Ansaugloch (3102) zusammenwirken kann, wobei sich der Lebensmittelverarbeitungsbehälter (2) in dem Sperrzustand befindet, wenn der obere Deckel (30) in eine Position gedreht wird, in der sich das Sperrloch (304) oberhalb des Ansauglochs (3102) befindet, und wobei, wenn der obere Deckel (30) in eine Position gedreht wird, in der das Sperrloch (304) von dem Ansaugloch (3102) versetzt ist, der Lebensmittelverarbeitungsbehälter (2) sich in dem Verbindungszustand befindet.

3. Lebensmittelverarbeitungsvorrichtung (100) nach Anspruch 2, wobei eine erste Dichtung (33) im Inneren des Ansauglochs (3102) vorgesehen ist, wobei die erste Dichtung (33) eine Innenwand, ein oberes Ende und ein unteres Ende des Ansauglochs (3102) bedeckt, wobei, wenn sich der Lebensmittelverarbeitungsbehälter (2) in dem Sperrzustand befindet, ein Boden des Sperrlochs (304) mit der ersten Dichtung (33) in einer Presspassung derart zusammenwirkt, dass eine Abdichtung zwischen dem oberen Deckel (30) und dem unteren Deckel (31) bereitgestellt wird.

4. Lebensmittelverarbeitungsvorrichtung (100) nach einem der Ansprüche 1 bis 3, wobei eine Innenwand des Entlüftungsteils (303) mit einem Stopfen (3032) versehen ist und die zweite obere Wand (310) mit einer Stopfenführung (3103) versehen ist, die konzentrisch zu der Schiebeführung (3101) ist, wobei, wenn der obere Deckel (30) gedreht wird, der Stopfen (3032) innerhalb der Stopfenführung (3103) derart verschiebbar ist, dass der obere Deckel (30) und der untere Deckel (31) dazu gebracht werden, zwischen dem Verbindungszustand und dem Sperrzustand zu wechseln.

5. Lebensmittelverarbeitungsvorrichtung (100) nach Anspruch 4, wobei mindestens ein Rotationsstoppsteg (3104) innerhalb der Stopfenführung (3103) vorgesehen ist, wobei, wenn der Stopfen (3032) derart gedreht wird, dass er gegen den Rotationsstoppsteg (3104) stößt, sich das Sperrloch (304) oberhalb des Ansauglochs (3102) befindet.

6. Lebensmittelverarbeitungsvorrichtung (100) nach einem der Ansprüche 1 bis 5, wobei die zweite obere Wand (310) in ihrer Mitte mit einem Zusammensetzungsloch (312) versehen ist und die erste obere Wand (301) mit einem Positionierungsloch (305) versehen ist, das dem Zusammensetzungsloch (312) gegenüberliegt, wobei eine Drehachse (34), die den oberen Deckel (30) und den unteren Deckel (31) drehbar verbindet und um die der obere Deckel (30) drehbar ist, innerhalb des Zusammensetzungslochs (312) und des Positionierungslochs (305) vorgesehen ist.

7. Die Lebensmittelverarbeitungsvorrichtung (100) nach einem der Ansprüche 1 bis 6, wobei an einem Umfang des Entlüftungsteils (303) ein sich nach oben erstreckender ringförmiger vorstehender Steg (306) vorgesehen ist und die erste obere Wand (301), die dem ringförmigen vorstehenden Steg (306) verbunden ist, nach oben geneigt vorgesehen ist, wobei die Vakuumerzeugungsvorrichtung (4) oberhalb des oberen Deckels (30) angeordnet ist und zwischen der Vakuumerzeugungsvorrichtung (4) und dem oberen Deckel (30) eine zweite Dichtung (35) vorgesehen ist.

8. Lebensmittelverarbeitungsvorrichtung (100) nach Anspruch 7, wobei die zweite Dichtung (35) abdichtend mit dem ringförmig vorstehenden Steg (306) verbunden ist.

9. Die Lebensmittelverarbeitungsvorrichtung (100) nach einem der Ansprüche 1 bis 8, wobei der untere Deckel (31) mit einer dritten Dichtung (36) versehen ist, die abdichtend mit dem Lebensmittelverarbeitungsbehälter (2) verbunden ist.

## Revendications

1. Un robot culinaire (100) comprenant une base (1), un dispositif (4) de création de vide, un bol (2) de traitement d'aliments prévu sur la base (1) et un couvercle de bol (3) prévu sur le bol (2) de traitement d'aliments, le couvercle de bol (3) comprenant un couvercle supérieur (30) et un couvercle inférieur (31) qui sont assemblés de manière rotative pour former une cavité réservée (32) entre eux, le couvercle supérieur (30) et le couvercle inférieur (31) étant aptes à basculer entre un état de communication dans lequel la cavité réservée (32) est en communication avec le bol (2) de traitement d'aliments et un état bloqué dans lequel la communication est bloquée, et le dispositif (4) de création de vide qui communique avec la cavité réservée (32) est apte à mettre en oeuvre une opération de création de vide sur le bol (2) de traitement d'aliments, **caractérisé en ce que** le couvercle supérieur (30) comprend une première paroi supérieure (301) et une première paroi latérale (302) reliée à la première paroi supérieure (301), la première paroi supérieure (301) étant dotée d'une partie d'aération (303) en son centre, au moins un trou d'aération (3031) étant prévu dans la partie d'aération (303), **en ce que** le couvercle inférieur (31) comprend une deuxième paroi supérieure (310) et une deuxième paroi latérale (311) reliée à la deuxième paroi supérieure (310), une fente coulissante (3101) étant prévue sur la deuxième paroi supérieure (310), la première paroi latérale (302) étant insérée à l'intérieur de la fente coulissante (3101) et apte à tourner le long de la fente coulissante (3101), la deuxième paroi supérieure (310) présentant un trou d'aspiration (3102) qui est apte à communiquer avec le trou de ventilation (3031).

2. Le robot culinaire (100) selon la revendication 1, dans lequel une paroi s'étend vers le bas à partir de la première paroi supérieure (301), formant un trou de blocage (304) qui est apte à coopérer avec le trou d'aspiration (3102) ; lorsque le couvercle supérieur (30) est tourné vers une position dans laquelle le trou de blocage (304) est situé au-dessus du trou d'aspiration (3102), le bol (2) de traitement d'aliments est dans l'état bloqué, et, lorsque le couvercle supérieur (30) est tourné dans une position dans laquelle le trou de blocage (304) est décalé par rapport au trou d'aspiration (3102), le bol (2) de traitement d'aliments est dans l'état de communication.

3. Le robot culinaire (100) selon la revendication 2, dans lequel un premier joint (33) est prévu à l'intérieur du trou d'aspiration (3102), le premier joint (33) recouvrant une paroi interne, une extrémité supérieure et une extrémité inférieure du trou d'aspiration (3102) ; lorsque le bol (2) de traitement d'aliments est dans l'état bloqué, un fond du trou de blocage (304) coopère avec le premier joint (33) avec ajustement serré, de manière à garantir une étanchéité entre le couvercle supérieur (30) et le couvercle inférieur (31).

4. Le robot culinaire (100) selon l'une quelconque des revendications 1 à 3, dans lequel une paroi interne de la partie de ventilation (303) est munie d'un organe d'arrêt (3032), et la deuxième paroi supérieure (310) est munie d'une fente d'arrêt (3103) qui est concentrique à la fente coulissante (3101) ; lorsque le couvercle supérieur (30) est tourné, l'organe d'arrêt (3032) est apte à coulisser à l'intérieur de la fente d'arrêt (3103) de manière à amener le couvercle supérieur (30) et le couvercle inférieur (31) à basculer entre l'état de communication et l'état bloqué.

5. Le robot culinaire (100) selon la revendication 4, dans lequel au moins une nervure d'arrêt de rotation (3104) est prévue à l'intérieur de la fente d'arrêt (3103) ; lorsque l'organe d'arrêt (3032) est tourné de façon à venir buter contre la nervure d'arrêt de rotation (3104), le trou de blocage (304) est situé au-dessus du trou d'aspiration (3102).

6. Le robot culinaire (100) selon l'une quelconque des revendications 1 à 5, dans lequel la deuxième paroi supérieure (310) présente un trou d'assemblage (312) en son centre, et la première paroi supérieure (301) présente un trou de positionnement (305) qui fait face au trou d'assemblage (312), un axe rotatif (34), qui relie de manière rotative le couvercle supérieur (30) et le couvercle inférieur (31) et autour duquel le couvercle supérieur (30) est apte à tourner, étant prévu à l'intérieur du trou d'assemblage (312) et du trou de positionnement (305).

7. Le robot culinaire (100) selon l'une quelconque des revendications 1 à 6, dans lequel une nervure saillante en forme d'anneau (306) s'étendant vers le haut est prévue sur une périphérie de la partie d'aération (303), et la première paroi supérieure (301), qui est reliée à la nervure saillante en forme d'anneau (306), est disposée de manière inclinée vers le haut, le dispositif (4) de création de vide étant agencé au-dessus du couvercle supérieur (30), et un deuxième joint (35) étant prévu entre le dispositif (4) de création de vide et le couvercle supérieur (30).

8. Le robot culinaire (100) selon la revendication 7, dans lequel le deuxième joint (35) est relié de manière étanche à la nervure saillante en forme d'anneau (306).

9. Le robot culinaire (100) selon l'une quelconque des revendications 1 à 8, dans lequel le couvercle inférieur (31) est pourvu d'un troisième joint (36) qui est relié de manière étanche au bol (2) de traitement d'aliments.
